# EUROPEAN PATENT APPLICATION

(11) **EP 4 649 823 A1**
(43) Date of publication of application: **19.11.2025**
(21) Application number: 24175698.0
(22) Date of filing: 14.05.2024
(51) Int. Cl.: A01M 1/10, A01M 31/00

(54) **A PEST CONTROL DEVICE AND A METHOD FOR DETECTING A PEST AT OR IN A PEST CONTROL DEVICE**

(71) Applicant: Anticimex Innovation Center A/S, 3200 Helsinge (DK)
(72) Inventor: RAGNARSSON, Bergsteinn Gauti, 3200 Helsinge (DK)
(74) Representative: Zacco Denmark A/S

(57) **Abstract**

The disclosure relates to a pest control device (1) comprising a first VOC sensor (v1) for sensing at least one Volatile Organic Compound; a second VOC sensor (v2) for sensing at least one Volatile Organic Compound; wherein the first VOC sensor (v1) is placed at a first height in in the pest control device (1) and the second VOC sensor (v2) is placed at a second height in in the pest control device, wherein the second height is lower than the first height. The disclosure further relates to a method for detecting a pest at or in a pest control device.

## Description

### Technical field

The present disclosure relates to a pest control device and a method for detecting a pest at or in a pest control device. More specifically, the disclosure relates to a pest control device and a method for detecting a pest at or in a pest control device as defined in the introductory parts of the independent claims.

### Background art

Today, it is known to detect and identify insects by using sensor-equipped traps configured to capture and analyze volatile organic compounds (VOCs). The VOCs are released by the insects as part of their chemical communication system as well as part of their smell. The compounds act as pheromones, signaling substances, that convey information about the insect's species, sex and physiological state.

A commonly used technique for registering the VOCs is to use so-called electroantennography (EAG). In short, this technique measures electrical activity of insect antenna when exposed to specific chemicals, including the VOCs. This helps identify the compounds that elicit responses in insects. Gas chromatography (GS) is often coupled with mass spectrometry (MS) to separate and analyze complex mixtures of VOCs emitted by insects. By using EAG and GS-MS in combination, it is possible to identify specific compounds involved in insect signaling.

Electronic noses, sometimes referred to as digital noses, are designed to mimic the olfactory system and can detect and differentiate between various VOCs. By having traps with sensors in the form of electronic noses, rapid and non-invasive identification of pests, such as insects and rodents, can be achieved. In the field of agriculture, this type of traps are used for identifying the presence of certain types of insects to allow for timely intervention and pest control measures

Even though electronic noses and other sensors for capturing VOCs have proven successful in identifying insects, the traps equipped with such sensors are not commonly used. One reason for this is cost. The electronic noses, i.e. gas sensors, come with a relatively high cost. In addition, the work involved with fine-tuning the different VOC profiles also comes with a cost.

There is thus a need for improved pest control devices and pest traps based on VOC detection that are simpler and cheaper.

### Summary

It is an object of the present disclosure to mitigate, alleviate or eliminate one or more of the above-identified deficiencies and disadvantages in the prior art and solve at least the above mentioned problem. According to a first aspect there is provided a pest control device comprising a first VOC sensor for sensing at least one Volatile Organic Compound (VOC); a second VOC sensor for sensing at least one Volatile Organic Compound; wherein the first VOC sensor is placed at a first height in in the pest control device and the second VOC sensor is placed at a second height in in the pest control device, wherein the second height is lower than the first height. The pest control device is intended for detecting insects but will function for any pest species emitting Volatile Organic Compound gases.

The relation of the signal strength between the first VOC sensor and the second VOC sensor will be an indication of the density of the Volatile Organic Compound. Since the VOC composition is different for different insects, the density of the VOC gas will be an indication of which type of insect has released the VOC.

According to some embodiments, the first VOC sensor is arranged for sensing a first Volatile Organic Compound and the second VOC sensor is arranged for sensing a second Volatile Organic Compound different from the first Volatile Organic Compound and with a higher density than the density of the first Volatile Organic Compound.

The VOC relation of two different specific VOC gases can then be measured, which can pinpoint specific species more accurately as insect emitting VOC gases that either of the VOC sensors are not sensitive for will not be recognized and thus ignored. False indications when hunting for a specific insect can be avoided.

According to some embodiments, the first VOC sensor and the second VOC sensor, respectively, are configured to sense a plurality of Volatile Organic Compounds.

The same VOC sensor type can thereby be used as the first VOC sensor and the second VOC sensor, respectively. As the sensors are placed at different height in the pest control device, the density of the VOC can be estimated using the same type of sensor. This simplifies the pest control device enabling a cheaper product.

According to some embodiments, the pest control device comprises one or multiple VOC sensors placed at different heights between the first VOC sensor and the second VOC sensor.

Further VOC sensors makes it possible to measure more types of VOC gases and get a more accurate measurement and thereby a more accurate estimation of the insect species emitting the VOC.

According to some embodiments, the pest control device comprises a compartment separate from the main compartment of the pest control device for VOC sensors, wherein the compartment has one or a plurality of inlets for VOC.

This protects the VOC sensors from draft, dust and/or dirt making the pest control device more robust when used under different conditions.

According to some embodiments, the pest control device comprises individual compartments for each VOC sensor, where each individual compartment has an individual inlet for VOC from the main compartment of the pest control device.

This makes the VOC sensors even better protected from draft, dust and/or dirt making the pest control device even more robust when used under different conditions.

According to some embodiments, each VOC sensor is a sensor comprised in the group of: metal-oxide-semiconductor sensors, conducting polymer sensors, quartz crystal microbalance sensors, surface acoustic wave sensors, photoionization detectors, vapochromic devices. The type of sensor used is based on which VOC gas should be measured, price and energy consumption.

According to some embodiments, the pest control device comprises a processing circuitry and a memory, wherein the processing circuitry is configured to based on information from at least one of the VOC sensors detect that a pest is present at or in the pest control device. The processing circuitry can based on detected signals from VOC sensors detect insects.

According to some embodiments, the processing circuitry is further configured to determine a relation between different measured VOC gases; identify a pest species based on a comparison of the determined relation with a pre-calibrated table of species to VOC gas relation. The VOC relation of two or multiple different specific VOC gases can then be measured, which can be pinpoint specific species more accurately as insect emitting VOC gases that either of the VOC sensors are not sensitive for will not be recognized and thus ignored. False indications when hunting for a specific insect can be avoided.

According to some embodiments, the processing circuitry is further configured to determine a VOC density estimation based on a relation between a measured concentration of VOC gas at one VOC sensor compared to the measured concentration of VOC gas at at least one another VOC sensor; identify a pest species based on a comparison of the determined VOC density estimation with a pre-calibrated table of species to VOC density.

The relation of the signal strength between the first VOC sensor and the second VOC sensor will be an indication of the density of the Volatile Organic Compound. Since the VOC composition is different for different insects, the density of the VOC gas will be an indication of which type of insect has released the VOC.

According to some embodiments, the pest control device comprises wired or wireless communication means for commutating detection and/or species identification to an external electronic device. The information could also in some embodiments be presented directly on the trap on a display. The information could also in some embodiments be presented by simply sounding an alarm sound or light.

According to some embodiments, the pest control device comprises a battery for energizing the sensors. This is advantageous as the pest control device then easily can be placed anywhere without the need of a power grid.

According to some embodiments, the pest control device comprises one or multiple reference sensors placed on an outer surface of the pest control device for measurements of the air surrounding the pest control device. All measurements from the sensors inside the pest control device can then be normalized. Background noise or gases picked up by the sensors based on surrounding air can be subtracted, thus improving the sensitivity of the VOC sensors inside the pest control device. In some embodiments, when VOC sensors for different gases are present in the pest control device, one reference sensor per VOC sensor type can be present on the outside of the pest control device to be able to correct each type of VOC sensor for noise caused by outside surrounding air.

According to some embodiments, the pest control device is a trap comprising a main pest trap compartment with walls in all directions with one or multiple entrance holes arranged so as to not invite draft from air surrounding the pest control device while still allowing insects to enter the trap. According to some embodiments, the pest control device is a monitoring device.

According to a second aspect there is provided a method for detecting a pest at or in a pest control device according to the first aspect, comprising detecting, based on information from at least one of the VOC sensors, that a pest is present at or in the pest control device. According to some embodiments, the method comprises determining a relation between available measured VOC gases; identifying a pest species based on a comparison of the determined relation with a pre-calibrated table of species to VOC gas relation.

The VOC relation of two different specific VOC gases can then be measured, which can be pinpoint specific species more accurately as insect emitting VOC gases that either of the VOC sensors are not sensitive for will not be recognized and thus ignored. False indications when hunting for a specific insect can be avoided.

According to some embodiments, the method comprises determining a VOC density estimation based on a relation between a measured concentration of VOC gas at one VOC sensor compared to the measured concentration of VOC gas at at least one another VOC sensor; identifying a pest species based on a comparison of the determined VOC density estimation with a pre-calibrated table of species to VOC density. The relation of the signal strength between the first VOC sensor and the second VOC sensor will be an indication of the density of the Volatile Organic Compound. Since the VOC composition is different for different insects, the density of the VOC gas will be an indication of which type of insect has released the VOC.

According to some embodiments, the method comprises iterating setting the VOC sensors in sleep mode after not detecting VOC at any VOC sensor; waking the VOC sensors after a predetermined time period. As VOC sensors can consume fairly high amounts of power for a battery driven device, using a sleep cycle where the pest control device at intervals is awoken to use its VOC sensors, the battery lifetime can be vastly increased, saving on maintenance costs for the pest control device.

Effects and features of the second aspect are to a large extent analogous to those described above in connection with the first aspect. Embodiments mentioned in relation to the first aspect are largely compatible with the the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a cross-sectional side view of the pest control device according to an embodiment of the present disclosure with two VOC sensors.
Figure 2 shows a cross-sectional side view of the pest control device according to a further embodiment of the present disclosure with multiple VOC sensors.
Figure 3 shows a cross-sectional side view of the pest control device according to a still further embodiment of the present disclosure with multiple VOC sensors placed in separate compartments inside the pest control device.
Figure 4 is a flow chart illustrating a method according to an embodiment of the present disclosure.
Figure 5 is a flow chart illustrating a method according to a further embodiment of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

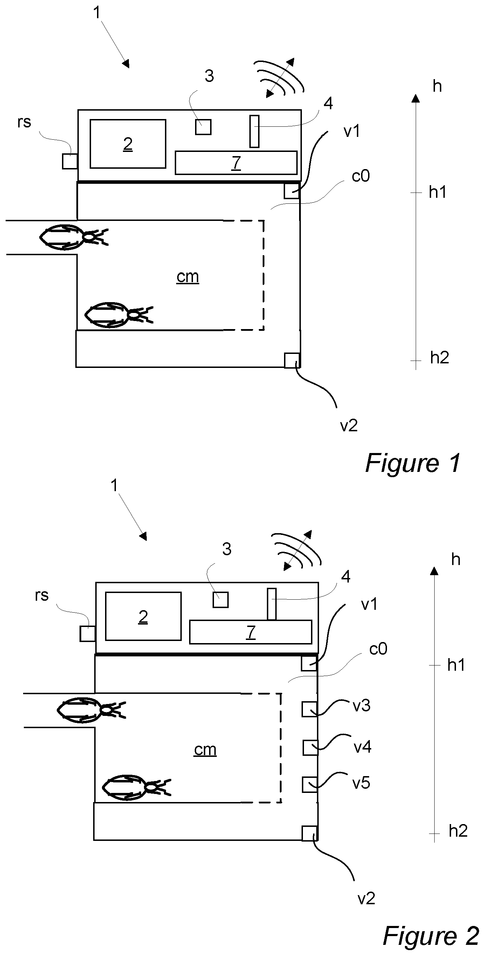

With reference to Figure 1 the first aspect of this disclosure shows a pest control device 1 comprising a first VOC sensor v1 for sensing at least one Volatile Organic Compound; a second VOC sensor v2 for sensing at least one Volatile Organic Compound. The first VOC sensor v1 is placed at a first height h1 in in the pest control device 1 and the second VOC sensor v2 is placed at a second height h2 in in the pest control device, where the second height h2 is lower than the first height h1. The height is indicated by the ruler named h in Figure 1. The relation of the signal strength between the first VOC sensor and the second VOC sensor will be an indication of the density of the Volatile Organic Compound. Since the VOC composition is different for different insects, the density of the VOC gas will be an indication of which type of insect has released the VOC.

The first VOC sensor v1 may be arranged for sensing a first Volatile Organic Compound and the second VOC sensor v2 is arranged for sensing a second Volatile Organic Compound different from the first Volatile Organic Compound and with a higher density than the density of the first Volatile Organic Compound. The VOC relation of two different specific VOC gases can then be measured, which can be pinpoint specific species more accurately as insect emitting VOC gases that either of the VOC sensors are not sensitive for will not be recognized and thus ignored. False indications when hunting for a specific insect can be avoided.

The first VOC sensor v1 and the second VOC sensor v2, respectively, may in some embodiments be configured to sense a plurality of Volatile Organic Compounds. As the sensors are placed on different height in the pest control device, the density of the VOC can be estimated using the same type of sensor. This simplifies the pest control device enabling a cheaper product.

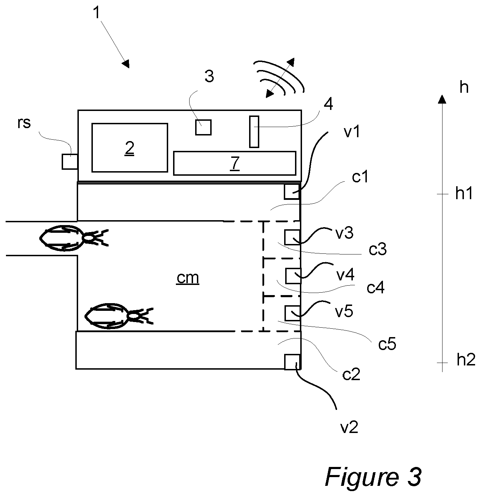

With reference to Figures 2 and 3 the pest control device may in some embodiments comprise one or multiple VOC sensors v3,v4,...,vn placed at different heights h between the first VOC sensor and the second VOC sensor. Further VOC sensors makes it possible to measure more types of VOC gases and get a more accurate measurement and thereby a more accurate estimation of the insect species emitting the VOC.

With reference to Figures 1 and 2 the pest control device comprises a compartment c0 separate from the main compartment cm of the pest control device for VOC sensors, wherein the compartment has one or a plurality of inlets for VOC protecting the VOC sensors from draft, dust and/or dirt making the pest control device more robust when used in different environments.

With reference to Figure 3 the pest control device comprises individual compartments c1-cn for each VOC sensor, where each individual compartment c1-cn has an individual inlet for VOC from the main compartment of the pest control device cm.

The dashed lines around the compartments of the embodiments of Figures 1-3 indicate protrusions in the walls for allowing gas to pass the walls of the compartments so that heavy gases may sink to the lower part or the lower compartments and light gases may rise to the higher part or the higher placed compartments.

The VOC sensors v1-vn disclosed in Figures 1-3 may be a sensor comprised in the group of: metal-oxide-semiconductor sensors, conducting polymer sensors, quartz crystal microbalance sensors, surface acoustic wave sensors, photoionization detectors, vapochromic devices.

The pest control devices disclosed in the embodiments of Figures 1-3 all comprise a processing circuitry 2 and a memory 3, wherein the processing circuitry is configured to based on information from at least one of the VOC sensors v1-vn detect that a pest is present at or in the pest control device 1.

When the plurality of VOC sensors are arranged to measure different VOC gases the processing circuitry 2 is further configured to determine a relation between different measured VOC gases; identify a pest species based on a comparison of the determined relation with a pre-calibrated table of species to VOC gas relation.

When the plurality of VOC sensors are of the same type, in some embodiments able to sense a broad spectrum of VOC gases, the processing circuitry is further configured to determine a VOC density estimation based on a relation between a measured concentration of VOC gas at one VOC sensor v1 compared to the measured concentration of VOC gas at at least one another VOC sensor v2; identify a pest species based on a comparison of the determined VOC density estimation with a pre-calibrated table of species to VOC density. The relation of the signal strength between the first VOC sensor and the second VOC sensor will be an indication of the density of the Volatile Organic Compound. Since the VOC composition is different for different insects, the density of the VOC gas will be an indication of which type of insect has released the VOC.

The pest control device as disclosed in the embodiments of Figures 1-3 comprises wired or wireless communication means 4 for commutating detection and/or species identification to an external electronic device. The pest control device could e.g. communicate in a system of pest control devices and then send information to a central electronic device that controls the system.

The information could also in some embodiments be presented directly on the trap on a display. The information could also in some embodiments be presented by simply sounding an alarm sound or light.

The embodiments of pest control devices disclosed in Figures 1-3 comprise a battery 7 for energizing the electrical components of the pest control device.

With reference to Figures 1-3 the pest control device comprises a reference sensor rs placed on an outer surface of the pest control device for measurements of the air surrounding the pest control device 1.

The pest control devices disclosed in figures 1-3 are trap devices for trapping insects, wherein the pest control device comprises a main pest trap compartment comprising walls in all directions with one or multiple entrance holes arranged so as to not invite draft from air surrounding the pest control device 1 while still allow insects to go into the trap.

The pest control device may in other embodiments be a monitoring device for detecting and identifying insects without trapping them. All components of the device except the trapping compartments may cn will be the same as for the trap embodiment. The monitoring device may be made smaller than the trap in absence of a trapping function.

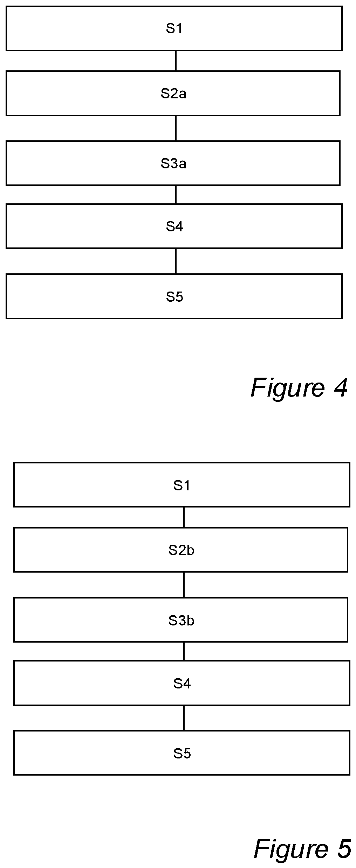

With reference to Figures 4 and 5 the second aspect of this disclosure shows a method for detecting a pest at or in a pest control device according to the first aspect, comprising detecting S1, based on information from at least one of the VOC sensors v1-vn, that a pest is present at or in the pest control device 1.

Figure 4 discloses a method where the pest control device comprises VOC sensors for detecting different VOC gases. The method comprises determining S2a a relation between available measured VOC gases; identifying S3a a pest species based on a comparison of the determined relation with a pre-calibrated table of species to VOC gas relation.

Figure 5 discloses a method where the pest control device comprises a plurality of identical VOC sensors, in some embodiments broad spectrum of VOC gases. The method comprises determining S2b a VOC density estimation based on a relation between a measured concentration of VOC gas at one VOC sensor v1 compared to the measured concentration of VOC gas at at least one another VOC sensor v2; identifying S3b a pest species based on a comparison of the determined VOC density estimation with a pre-calibrated table of species to VOC density.

With reference to both Figures 4 and 5 the embodiments further comprise iterating the steps of setting S4 the VOC sensors v1-vn in sleep mode after not detecting VOC at any VOC sensor v1-vn; and waking S5 the VOC sensors v1-vn after a predetermined time period. AS VOC sensors may by power consuming components, a sleep mode for the sensors may increase the battery up-time for battery driven devices considerable.

The person skilled in the art realizes that the present disclosure is not limited to the preferred embodiments described above. The person skilled in the art further realizes that modifications and variations are possible within the scope of the appended claims. For example, the skilled person understands that the designs disclosed in the embodiments of Figures 1-3 are only examples. The trap could e.g. have trap doors for hindering insects from exiting the trap again. The compartments for VOC sensors may look differently. Additionally, variations to the disclosed embodiments can be understood and effected by the skilled person in practicing the claimed disclosure, from a study of the drawings, the disclosure, and the appended claims.

## Claims

1. A pest control device (1) comprising
a first VOC sensor (v1) for sensing at least one Volatile Organic Compound;
a second VOC sensor (v2) for sensing at least one Volatile Organic Compound;
wherein the first VOC sensor (v1) is placed at a first height (h1) in in the pest control device (1) and the second VOC sensor (v2) is placed at a second height (h2) in in the pest control device, wherein the second height (h2) is lower than the first height (h1).

2. The pest control device (1) according to claim 1, wherein the first VOC sensor (v1) is arranged for sensing a first Volatile Organic Compound and the second VOC sensor (v2) is arranged for sensing a second Volatile Organic Compound different from the first Volatile Organic Compound and with a higher density than the density of the first Volatile Organic Compound.

3. The pest control device (1) according to claim 1, wherein the first VOC sensor (v1) and the second VOC sensor (v2), respectively, is configured to sense a plurality of Volatile Organic Compounds.

4. The pest control device (1) according to any one of the preceding claims, further comprising one or multiple VOC sensors (v3, v4, ... , vn) placed at different heights (h) between the first VOC sensor and the second VOC sensor.

5. The pest control device (1) according to any one of the preceding claims, further comprising a compartment (c0) separate from the main compartment (cm) of the pest control device for VOC sensors, wherein the compartment has one or a plurality of inlets for VOC.

6. The pest control device (1) according to any one of claims 1-4, further comprising individual compartments (c1-cn) for each VOC sensor, where each individual compartment (c1-cn) has an individual inlet for VOC from the main compartment of the pest control device (cm).

7. The pest control device (1) according to any one of the preceding claims, further comprising a processing circuitry (2) and a memory (3), wherein the processing circuitry is configured to
based on information from at least one of the VOC sensors (v1-vn) detect that a pest is present at or in the pest control device (1).

8. The pest control device (1) according to claim 7,
wherein the processing circuitry (2) is further configured to
determine a relation between different measured VOC gases;
identify a pest species based on a comparison of the determined relation with a pre-calibrated table of species to VOC gas relation.

9. The pest control device (1) according to claim 7,
wherein the processing circuitry is further configured to
determine a VOC density estimation based on a relation between a measured concentration of VOC gas at one VOC sensor (v1) compared to the measured concentration of VOC gas at at least one another VOC sensor (v2);
identify a pest species based on a comparison of the determined VOC density estimation with a pre-calibrated table of species to VOC density.

10. The pest control device (1) according to any one of the preceding claims, further comprising a reference sensor (rs) placed on an outer surface of the pest control device for measurements of the air surrounding the pest control device (1).

11. The pest control device (1) according to any one of the preceding claims, wherein the pest control device is
a monitoring device; or
a trap comprising a main pest trap compartment (cm) comprising walls in all directions with one or multiple entrance holes arranged so as to not invite draft from air surrounding the pest control device (1).

12. A method for detecting a pest at or in a pest control device according to any one of the preceding claims, comprising
detecting (S1), based on information from at least one of the VOC sensors (v1-vn), that a pest is present at or in the pest control device (1).

13. The method for detecting a pest according to claim 12, further comprising
determining (S2a) a relation between available measured VOC gases;
identifying (S3a) a pest species based on a comparison of the determined relation with a pre-calibrated table of species to VOC gas relation.

14. The method for detecting a pest according to claim 13, further comprising
determining (S2b) a VOC density estimation based on a relation between a measured concentration of VOC gas at one VOC sensor (v1) compared to the measured concentration of VOC gas at at least one another VOC sensor (v2);
identifying (S3b) a pest species based on a comparison of the determined VOC density estimation with a pre-calibrated table of species to VOC density.

15. The method for detecting a pest according to any one of claims 13-14, further comprising iterating
setting (S4) the VOC sensors (v1-vn) in sleep mode after not detecting VOC at any VOC sensor (v1-vn);
waking (S5) the VOC sensors (v1-vn) after a predetermined time period.
